# EUROPÄISCHE PATENTSCHRIFT

(11) **EP 0 806 240 B1**
(45) Veröffentlichungstag und Bekanntmachung des Hinweises auf die Patenterteilung: **29.08.2001**
(21) Anmeldenummer: 97105035.6
(22) Anmeldetag: 25.03.1997
(51) Int. Cl.: B01J 19/12, A61C 13/06, A61C 13/20, A61C 19/00

(54) **Polymerisationsgerät**
Polymerization apparatus
Appareil de polymérisation

(30) Priorität: 08.05.1996 DE 19618543
(43) Veröffentlichungstag der Anmeldung: 12.11.1997
(73) Patentinhaber: Ivoclar Vivadent AG, 9494 Schaan (LI)
(72) Erfinder: Kunkel, Peter, 9495 Triesen (LI); Mertins, Jürgen, 9473 Gams (CH); Walser, Eckart, 9490 Vaduz (LI)
(74) Vertreter: Baronetzky, Klaus, Dipl.-Ing.

(56) Entgegenhaltungen:
- EP-A- 0 128 324
- WO-A-95/08300
- FR-A- 2 090 395
- US-A- 4 421 987

## Beschreibung

Die Erfindung betrifft ein Polymerisationsgerät, gemäß dem Oberbegriff von Anspruch 1.

Ein derartiges Polymerisationsgerät ist aus der WO 95/08300 bekannt. Bei dieser Polymerisationsvorrichtung wird ein Stück vorimprägniertes Matrixgewebe auf einen Zahnstumpf oder ein anderes Modell aufgebracht, wobei hier unter Modell sowohl Positiv- als auch Negativformen zu verstehen sind.

Aufgrund eines Differenzdrucks zwischen zwei Räumen in dem Gerät lehnt sich eine weiche Membran in dem Gerät an das Modell an, wodurch die Folie an das Modell gedrückt wird und entsprechend der Kontur des Modelles verformt wird.

Ein Problem von Polymerisationsgeräten ist die genaue und zuverlässige Polymerisation aufgrund der Lichthärtung. Gerade bei Zahnersatzteilen ist es unabdingbar, daß eine vollständige Durchhärtung erfolgt, wobei die Durchhärtung innerhalb einer begrenzten Zeit sichergestellt werden muß. Daher werden regelmäßig leistungsintensive Lichtquellen mit entsprechenden Spektren verwendet. Aus thermischen, aber auch aus energetischen Gründen sollte die aufgenommene elektrische Leistung nicht zu groß sein, zumal mit hoher Lichtintensität strahlende Lichtquellen auch als Verbrauchsteile vergleichsweise teuer sind.

Bei dem aus der vorstehenden Veröffentlichung bekannten Gerät muß die Lichtstrahlung die flexible Membran durchtreten, was gewisse Verluste der Lichtleistung mit sich bringt. Zudem muß der Abstand zwischen dem Zahnstumpf und der Lichtquelle so gewählt sein, daß bei allen in der Praxis auftretenden Modellgrößen ausreichend Platz bleibt. Andererseits nimmt die Lichtleistung mit der Entfernung überproportional ab, so daß lichtleistungsverbessernde Maßnahmen bekannt geworden sind.

Hierzu gehören gemäß der vorstehend genannnten Druckschrift nicht weiter dargestellte Maßnahmen zur Verbesserung der Reflektion von Lichtstrahlen im Bereich der Lampe sowie spezielle Reflektoren in Form eines Ringspiegels 19, der den gesamten Modellraum ausfüllt.

Die Zykluszeit vor der eigentlichen Lichthärtung wird maßgeblich davon bestimmt, wie schnell der erforderliche Unterdruck im Modellraum erzeugt werden kann.

Für die Verformung der Folie, die sich an das Modell anschmiegen muß, ist das Aufbringen einer gleichmäßig hohen Kraft erforderlich, was in der Praxis durch eine entsprechende Druckdifferenz realisiert ist. Diese Druckdifferenz in Verbindung mit den teilweise zerklüfteten Modellen führt zu einer erheblichen Belastung der flexiblen Membran. Die Membran muß daher aus Sicherheitsgründen vergleichsweise häufig ausgetauscht werden, denn ein Reißen oder auch nur ein kleines Loch in der Membran hätte sehr nachteilige Folgen auf das Verformungsergebnis.

Demgegenüber liegt der Erfindung die Aufgabe zu Grunde, ein Polymerisationsgerät gemäß dem Oberbegriff von Anspruch 1 zu schaffen, daß sowohl von der Lichtausbeute her als auch von der Dauerhaltbarkeit der Membran her verbessert ist.

Diese Aufgabe wird erfindungsgemäß durch Anspruch 1 gelöst. Vorteilhafte Weiterbildungen ergeben sich aus den Unteransprüchen.

Überraschend lassen sich mit der erfindungsgemäßen Höheneinstellbarkeit gleich mehrere Vorteile erzielen. Die Membran muß nicht so weit ausgelenkt werden, so daß Ihre Belastung stark sinkt und die Dauerhaltbarkeit verbessert ist. Der Fortfall der Ringspiegel erlaubt ebenfalls, das Modell mit der Folie in der Praxis näher an die Membran heranzuführen. Damit sinkt auch der Abstand zu den Strahlern oder Lichtquellen, so daß insofern die Lichtausbeute verbessert ist. Es versteht sich, daß bei Bedarf der gesamte Innenraum des Polymerisationsgeräts verspiegelt sein kann.

Auch lichttechnisch besonders günstig ist ferner die geringe erforderliche Auslenkung der Membran. Sie kann aus dünnem Material mit besserer Lichtdurchlässigkeit hergestellt werden, ohne daß ihre Dauerhaltbarkeit leidet.

Gemäß einer vorteilhaften Ausgestaltung ist es sogar vorgesehen, daß die Füllkörper seitlich des Modellsockels ebenfalls verspiegelt sind. Durch die erfindungsgemäße Ausgestaltung läßt sich zudem die Druckaufbringzeit stark reduzieren, denn es kann eine erhebliche Anzahl von Füllkörpern vorgesehen sein, die druckfest sind, also daß im Modellraum insofern eine geringere Luftmenge verbleibt, die evakuiert werden muß. Dies bedingt eine entsprechend verminderte Betriebsdauer und/oder Leistung einer Saugpumpe.

Gemäß einer besonders bevorzugten Ausgestaltung ist es vorgesehen, mit einer einzigen Pumpe zu arbeiten, die Luft von dem Modellraum in den Kompressionsraum, also von dem zweiten in den ersten Raum leitet. Hierdurch läßt sich ein besonders guter Wirkungsgrad erzielen und es entfällt eine separate Vakuumpumpe.

Gemäß einer weiteren bevorzugten Ausgestaltung ist es vorgesehen, die Höheneinstellbarkeit mittels eines Einlagekörpers zu gewährleiten. Die Einstelleinrichtung kannn beispielsweise als Distanzhülse ausgebildet sein, die auswechselbar unter einer Lagerplatte für die Modelle einsetzbar ist. Der Einsatzkörper kann jedoch auch zugleich als Füllkörper ausgebildet sein und damit den zu evakuierenden Raum reduzieren.

Gemäß einer weiteren, besonders bevorzugten Ausgestaltung ist es vorgesehen, die Einstelleinrichtung für die erfindungsgemäße Höhenverstellung durch Rasten zu realisieren, die an der Umfangswand des Modellraums innen angebracht sind und die eine federbelastete Rastung der Lagerplatte ermöglichen. Die Lagerplatte erweist hierzu an ihrem Umfang an den den Rasten entsprechenden geeigneten Stellen federbelastete Kugeln auf, so daß nach Überwindung der Rastkraft eine Bewegung der Lagerplatte sowohl nach unten als auch nach oben möglich ist.

Bei einer weiteren, besonders bevorzugten Ausführungsform ist es vorgesehen, daß die erfindungsgemäße Einstelleinrichtung eine in vertikaler Richtung schiebebewegliche Lagerung der Lagerplatte aufweist. Über eine druckdichte Kraftübertragungsvorrichtung läßt sich die Höheneinstellung von außen bewerkstelligen, so daß eine Höheneinstellung auch noch nach dem Schließen des Polymerisationsgeräts möglich ist.

Die druckdichte Kraftübertragungsvorrichtung kann beispielsweise über eine durch die Modellraumwand durchgeführte, abgedichtete Achse realisiert sein, die ein Schwenklager für die Höheneinstelleinrichtung bildet. Um die Lagerplatte horizontal zu halten, weist diese Ausführungsform bevorzugt eine Parallelogrammführung für die Lagerplatte auf.

Gemäß einer weiteren, besonders bevorzugten Ausführungsform der Einstelleinrichtung ist es vorgesehen, daß die Einstelleinrichtung mittels mindestens eines in dem Modellraum integrierten Antriebsmotors, insbesondere eines elektrischen Motors erfolgt. Beispielsweise können unten an der Lagerplatte kleine Elektromotoren angeflanscht sein, die mit Ritzeln ausgestattet sind, die in Zahnstangen kämmen, die in der Innenwand des Modellraums angebracht sind. Es versteht sich, daß die so gebildeten Getriebe bevorzugt schmiermittelfrei ausgebildet sind und beispielsweise aus Kunststoff bestehen können, um eine Verunreinigung der im Vakuum zu polymerisierenden Folie auszuschließen.

Weitere Einzelheiten, Vorteile und Merkmale ergeben sich aus der nachstehenden Beschreibung mehrerer Ausführungsbeispiele anhand der Zeichnungen. Es zeigen:
- Fig. 1: eine erste Ausführungsform eines erfindungsgemäßen Polymerisationsgeräts;
- Fig. 2: eine zweite Ausführungsform eines erfindungsgemäßen Polymerisationsgeräts;
- Fig. 3: eine Draufsicht auf das Unterteil bei abgenommenem Oberteil einer weiteren Ausführungsform eines erfindungsgemäßen Polymerisationsgeräts; und
- Fig. 4: eine schematisierte Seitenansicht zu der Ausführungsform gemäß Fig. 3.

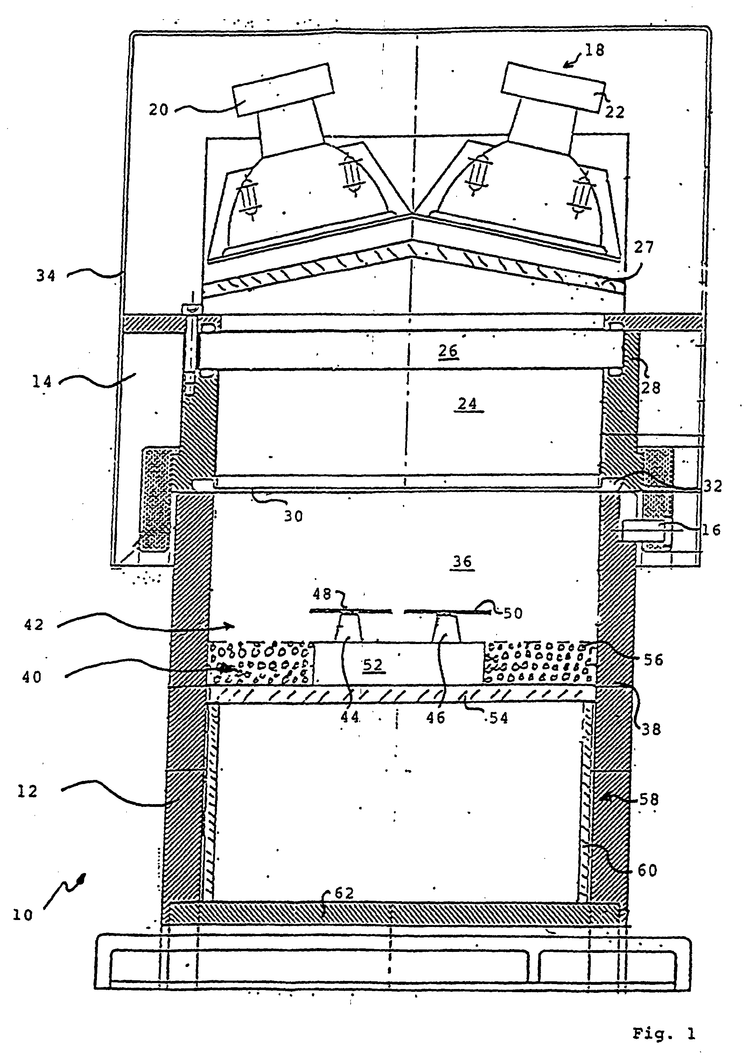

Die in Fig. 1 dargestellte Ausführungsform eines Polymerisationsgeräts 10 weist ein Unterteil 12 und ein Oberteil 14 auf. Das Oberteil 14 ist mit dem Unterteil 12 lösbar verbunden, wozu ein Bajonettverschluß 16 vorgesehen ist. Das Oberteil 14 weist einen Strahler 18 mit zwei Lampen 20 und 22 auf, deren Spektren sichtbares Licht ggf. mit einem geringen UV-Anteil umfaßt. Es versteht sich, daß anstelle der Lampen 20 und 22 auch andere geeignete für die Lichthärtung in Frage kommende Strahler verwendet werden können. Die Lampen 20 und 22 sind leicht geneigt angeordnet, so daß sie auf einen Bereich knapp unterhalb des Endes des Oberteils 14 fokussieren. Über nicht dargestellte Gebläse werden sie gekühlt und sind knapp oberhalb eines ersten Raumes oder Kompressionsraumes 24 des Oberteils 14 gelagert. Der Kompressionsraum weist eine für die von dem Strahler 18 abgegebene Strahlung durchlässige Deckwand 26 und eine Ringwand 28 auf, die sich kreisringförmig um den Kompressionsraum 24 erstreckt. Zwischen dem Strahler 18 und der Deckwand 26 erstreckt sich ein Infrarotfilter 27, um die Wärmebelastung des Polymerisationsgerätes 10 zu reduzieren.

Der Kompressionsraum 24 ist unten über eine Membran 30 abgeschlossen, die sehr flexibel und dehnbar ist und an ihrem Aussenumfang über Wülste 32 an der Ringwand 28 eingespannt ist. Der Oberteil weist ferner eine Schutzabdeckung 34 auf, die die gesamte Höhe des Oberteils 14 abdeckt.

Die Ringwand 28 weist einen in Fig. 1 nicht dargestellten Druckanschluß auf, mit welchem Kompressionsraum 24 unter Überdruck setzbar ist. Hierzu ist ein nicht dargestellter Kompressor vorgesehen.

Der Unterteil 12 weist einen zweiten Raum (Modellraum) 36 auf, der von druckfesten Modellraumwänden 38 umgeben ist. In dem Modellraum 36 ist eine Stützvorrichtung 40 vorgesehen, die der Abstützung eines Modells 42 dient. Das Modell 42 kann eine beliebige Anzahl von Zahnstümpfen 44, 46 aufweisen, wobei im dargestellten Ausführungsbeispiel zwei Zahnstümpfe vorgesehen sind. Auf diesen liegt je eine Folie 48, 50.

Die Stützvorrichtung 40 bildet insofern einen Sockel 52 für die Zahnstümpfe 44 und 46. Der Sockel 52 ruht auf einer Lagerplatte 54, wobei der Raum zwischen der Modellraumwand 38 und dem Sockel 52 bevorzugt über kugelige Füllkörper 56 ausgefüllt ist. Die Füllkörper 56 dienen sowohl der Verminderung des freien Luftraums in dem Modellraum 36 als auch der Abstützung der Membran 30 beim Formvorgang. Die Stützvorrichtung 40 kann als Sockel auch Teil des Modells sein, oder ihre Höhe kann beispielsweise durch Unterlegen mit Distanzplatten ausgewählter Dicke einstellbar sein.

Eine erfindungsgemäße Einstelleinrichtung 58 weist im dargestellten Ausführungsbeispiel einen austauschbaren Distanzring 60 auf, der auf einem Boden 62 des Unterteils 12 abgestützt ist und dessen Höhe die Höhe der Lagerplatte 54 und damit den Abstand zwischen der Folie 48 und der Membran 30 festlegt. Erfindungsgemäß ist es vorgesehen, je nach Größe der Zahnstümpfe bzw. der Modelle unterschiedlich hohe Distanzringe 60 einzusetzen, so daß stets das Modell möglichst nahe an der Membran 30 ruht.

Die Füllkörper 56 sind bevorzugt verspiegelt oder reflektierend, so daß die Polymerisationsstrahlung dort reflektiert wird und zu den Folien 48, 50 gelangt. Auch sind die Innenoberflächen der Ringwand 28 und des Modellraums 36 ebenfalls bevorzugt verspiegelt, was den Lichtwirkungsgrad ebenfalls erhöht.

Der Modellraum 36 ist mit einem in Fig. 1 nicht dargestellten Unterdruckanschluß versehen, der mit einer ebenfalls nicht dargestellten Vakuumpumpe in Verbindung steht. Über diesen Unterdruckanschluß läßt sich der Modellraum 36 evakuieren und ein Tiefziehen der Folien 48 und 50 erreichen.

Das Tiefziehen und Polymerisieren erfolgt in folgender Weise:

Zunächst wird bei geöffnetem Gerät ein geeigneter Distanzring für das zu behandelnde Modell ausgewählt. Dieser wird eingesetzt und dann die Lagerplatte 54 auf den Distanzring aufgelegt. Das Modell 42 wird genau mittig auf die Lagerplatte 54 gestellt und der es umgebende Bereich wird mit den verspiegelten Kunststoffkugeln 56 so gefüllt, daß die Füllung etwa bündig zum Sockel 52 ist.

Anschließend wird auf jeden Zahnstumpf 44, 46 eine aus lichtpolymerisierbarem Kunststoff, in den Glasfasern eingebettet sind, bestehende Folie 48, 50, aufgelegt. Über den Bajonettverschluß 16 werden Oberteil und Unterteil miteinander verbunden, so daß das Polymerisationsgerät 10 insgesamt als druckfeste Einheit vorliegt. Sowohl der erste Raum 24 als auch der zweite Raum 36 werden mit Unterdruck beaufschlagt, wobei Oberteil 14 und Unterteil 12 aufeinander gedrückt werden. Hierdurch werden die gleichzeitig als Ringdichtung dienenden Wülste 32 komprimiert, und der Bajonettverschluß 16 kann eingerastet werden.

Anschließend wird der Unterdruck im ersten Raum 24 entfernt und durch einen Überdruck von etwa 2 bar ersetzt. Zu diesem Zeitpunkt können die Lampen 20, 22 mit niedriger Leistung eingeschaltet sein, um das Modell 42 durch ein nicht dargestelltes Guckloch beobachten zu können. Durch den Überdruck von 2 bar im Kompressionsraum 24 wird die lichtdurchlässige und hochflexible Membran 30 auf die Folien 48, 50 gedrückt, die ihrerseits über dem jeweiligen Zahnstumpf 44 und 46 gedrückt und dort fest adaptiert werden. In diesem Zustand wird die Leistung des Strahlers 18 auf Maximalleistung erhöht und die Polymerisation oder Lichthärtung der Folien findet statt, während der volle Druck im Kompressionsraum 24 anliegt.

Nach Abschluß der Polymerisation wird der Überdruck aus dem Kompressionsraum 24 abgelassen und der Kompressionsraum 24 bei Normaldruck belassen oder gegebenenfalls unter Unterdruck gesetzt. In diesem Zustand läßt sich der Bajonettverschluß wieder öffnen und der Unterdruck im Modellraum 36 wird ebenfalls abgelassen.

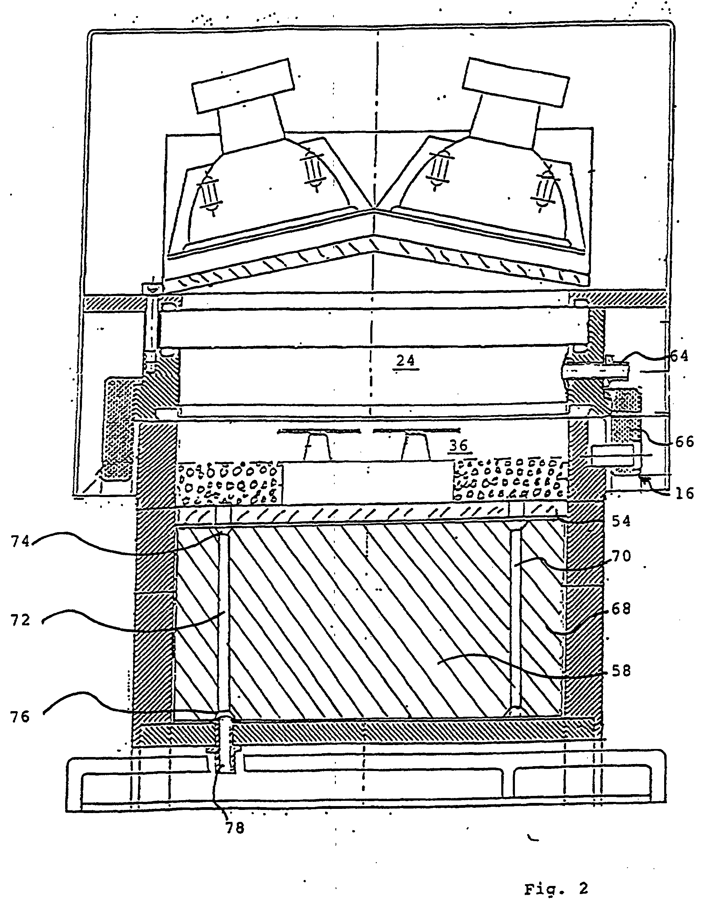

Eine modifizierte Ausgestaltung des erfindungsgemäßen Polymerisationsgeräts 10 ist aus Fig. 2 ersichtlich. Dieses Gerät ist kompakter als das Polymerisationsgerät gemäß Fig. 1. Es läßt sich schneller und mit geringerem Energieaufwand unter Unterdruck- bzw. Überdruck setzen. Hierzu ist die Höhe des Kompressionsraums 24 etwa auf die Hälfte reduziert. Um den Luftanschluß 64 aufzunehmen, ist ein Haltering 66 des Bajonettverschlusses 16 an der Stelle des Luftanschlusses 64 etwas abgesenkt. Ferner ist der Modellraum auf das Minimum verkleinert und das Modell 42 erstreckt sich nunmehr ausgesprochen knapp unterhalb der Membran 30. Die Membran 30 muß bei dieser Ausgestaltung noch weniger dehnbar sein als bei der Ausführungsform gemäß Fig. 1, was auch ihrer Haltbarkeit zugute kommt.

Anstelle des Distanzrings 60 ist ein Distanzkörper 68 unterhalb der Lagerplatte 54 angeordnet. Der Distanzkörper 68 füllt den gesamten Raum unterhalb der Lagerplatte 54 aus.

Der Distanzkörper 68 weist Unterdruckkanäle 70, 72, die sich über seine ganze Höhe erstrecken, auf. Die Unterdruckkanäle 70, 72 münden je in Ringkanälen 74, 76, die sich rings um den Distanzkörper 68 an seiner Oberseite bzw. an seiner Unterseite erstrecken. Durch entsprechende Bohrungen in der Lagerplatte 54 wird die Weiterleitung des Unterdrucks über einen Unterdruckanschluß 78 in den oberen Bereich des Modellraums 36 möglich.

Sowohl der Luftanschluß 64 als auch der Unterdruckanschluß 78 sind mit einer nicht dargestellten Pumpe verbunden, die über entsprechende Schaltventile sowohl Unterdruck in dem ersten und zweiten Raum als auch Überdruck im ersten Raum erzeugen kann.

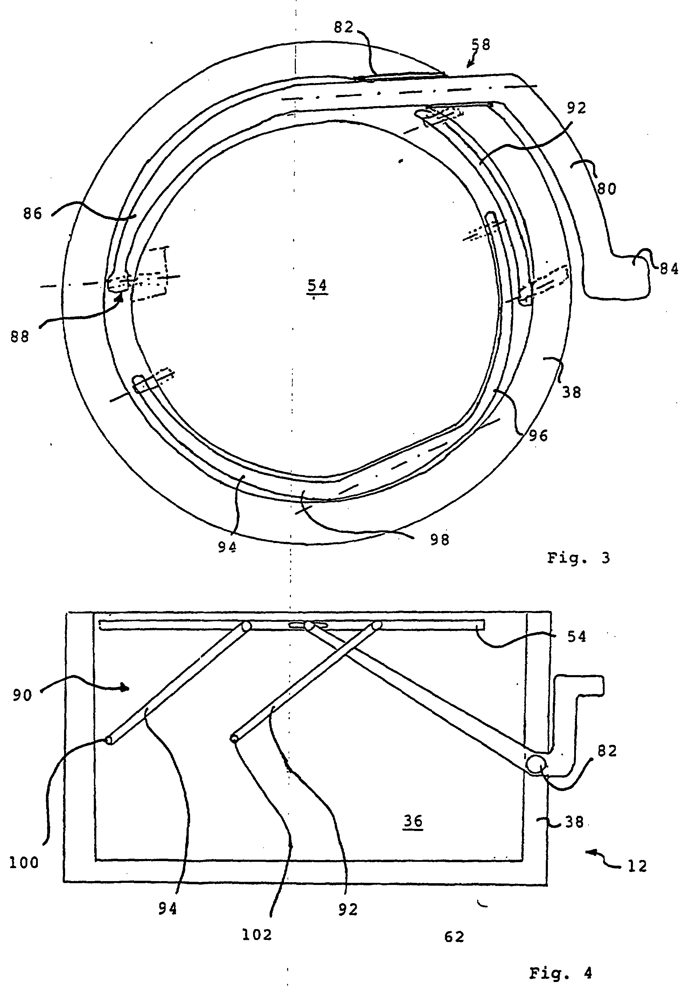

Eine modifizierte Ausgestaltung der Einstelleinrichtung 58 ist aus Fig. 3 und 4 ersichtlich. Bei dieser Ausgestaltung weist die Einstelleinrichtung 58 einen Hebel 80 auf, der in der Modellraumwand 38 über eine Lagerbuchse 82 gelagert ist. Der Hebel 80 weist eine Greifhandhabe 84 auf, mit welcher die Stellung der Lagerplatte 54 von außen einstellbar ist. Der Hebel 80 durchtritt die Modellraumwand 38 etwa tangential zur Lagerplatte 54 und läuft dort in einem gekrümmten Abschnitt 86 aus, der sich an die Modellraumwand 38 anlehnt und horizontal schmal baut. Der Hebel 80 weist an dem Ende des bogenförmigen Abschnitts 86 ein Gelenk 88 zur Lagerplatte 54 auf, dessen Gelenkachse sich parallel zur Achse der Lagerbuchse 82 erstreckt.

Die Lagerplatte 54 läßt sich mit dieser Stelleinrichtung 58 grundsätzlich in ihrer Höhe verstellen. Es ist jedoch wünschenswert, daß sie stets eine horizontale Lage bewahrt. Hierzu ist eine aus Fig. 4 besser ersichtliche Parallelogrammführung 90 vorgesehen, die zwei Führungsstangen 92 und 94 aufweist. Wie aus Fig. 4 ersichtlich ist, sind die Führungsstangen 92 und 94 in der Projektion auf ihre Schwenkachsen, die parallel zueinander verlaufen, gleich lang. Sie sind jedoch je gebogen, um sich außerhalb der Lagerplatte 54 zu erstrecken. Hierbei führt die Führungsstange 92 in der aus Fig. 3 ersichtlichen Weise die Lagerplatte lediglich einseitig, während die Führungsstange 94 zwei Schenkel 96 und 98 aufweist und die Lagerplatte 94 bogenförmig umgreift. Der Hebel 80 ist an der Lagerplatte zur Kompensation der Schwenkbewegung der Parallelogrammführung über ein Langloch gelagert, das aus Fig. 4 ersichtlich ist.

Die Lagerstellen 100 und 102 der Führungsstangen 94 und 92 sind in vertikaler Richtung betrachtet je etwa auf gleicher Höhe angeordnet und etwa in der Höhe der Mitte des Modellraums 36. Die Lagerbuchse 82 ist ebenfalls auf dieser Höhe angeordnet. Mit dieser Ausgestaltung'ist es möglich, die Lagerplatte 54 von der in Fig. 4 dargestellten obersten Stellung in die unterste Stellung zu überführen, in welcher sie dem Boden 62 des Unterteils 12 benachbart ist.

Diese Ausführungsform erlaubt eine schnelle Höhenverstellung mit der erfindungsgemäßen Einstelleinrichtung, erfordert jedoch ein im wesentlichen füllkörperfreies Volumen des Modellraums 36.

Gemäß einer weiteren Ausführungsform ist es vorgesehen, den Boden 62 des Unterteils 12 als druckfesten Kolben auszubilden und von außen verschiebbar zu lagern. Der Boden 62 bildet dann die Einstelleinrichtung, und es ist möglich, die Einstelleinrichtung 58 von außen zu betätigen, aber dennoch einen geringen freien Luftraum im Modellraum 36 zu gewährleisten.

Bei einer weiteren Alternative dieser Ausgestaltung ist es vorgesehen, den Boden 62 auf der Unterlage fest abzustützen und das gesamte Polymerisationsgerät abgesehen von dem Boden und dem dort aufgebrachten Modell in seiner Höhe zu verstellen. Auch durch diese Ausgestaltung läßt sich die erfindungsgemäße Einstelleinrichtung realisieren.

## Patentansprüche

1. Polymerisationsgerät, mit einem Strahler für die Abgabe von Polymerisationsstrahlung, insbesondere Licht, in einen ersten Raum, mit einer flexiblen strahlungsdurchlässigen Membran (30), die einen zweiten Raum (36) von dem ersten Raum (24) trennt, wobei in dem zweiten Raum (36) ein von der Strahlung beaufschlagbares Modell (42) insbesondere eines Zahnstumpfes lagerbar ist, zwischen dem und der Membran (30) sich eine Folie (48, 50) erstreckt und wobei die Membran (30) über einen Differenzdruck zwischen dem ersten Raum (24) und dem zweiten Raum (36) zum Modell (42) hin die Folie (48, 50) verformend auslenkbar ist, **dadurch gekennzeichnet**, daß eine Einstelleinrichtung (58) für die Festlegung des Abstands zwischen Modell (42) und Membran (30) vorgesehen ist und der zweite Raum (36) im wesentlichen druckfeste Füllkörper (56) aufweist, die sich außerhalb des Bereichs von Modell (42) und Folie (48,50) erstrecken.

2. Polymerisationsgerät nach Anspruch 1 **dadurch gekennzeichnet**, daß der zweite Raum (36) eine Stützvorrichtung (40) für das Modell (42) aufweist, deren Höhe und Abstand zur Membran (30) einstellbar ist.

3. Polymerisationsgerät nach einem der vorhergehenden Ansprüche, **dadurch gekennzeichnet**, daß eine Stützvorrichtung (40) für die Abstützung des Modells (42) eine Lagerplatte (54) aufweist, die auf einem austauschbaren Stützeinsatz (60;68), insbesondere einem Distanzring (60) abgestützt ist.

4. Polymerisationsgerät nach einem der vorhergehenden Ansprüche, **dadurch gekennzeichnet**, daß sich die Füllkörper (56) vollständig zwischen Folie (48, 50) und Membran (30) befinden.

5. Polymerisationsgerät nach einem der vorhergehenden Ansprüche, **dadurch gekennzeichnet**, daß der erste Raum (24) einen Luftanschluß (64) aufweist, über welchen der Differenzdruck als Überdruck relativ zu dem Druck des zweiten Raums (36) in den ersten Raum (24) einleitbar ist.

6. Polymerisationsgerät nach einem der vorhergehenden Ansprüche, **dadurch gekennzeichnet**, daß der erste und der zweite Raum (24,36) je einen Unterdruckanschluß (64,78) für die Erzeugung eines Unterdrucks gegenüber der Umgebung aufweisen.

7. Polymerisationsgerät nach einem der vorhergehenden Ansprüche, **dadurch gekennzeichnet**, daß der Strahler (18) oberhalb des ersten Raums (24) angeordnet ist und eine dem Strahler (18) benachbarte Deckwand (26) des ersten Raums (24) eine für die Strahlung durchlässige Scheibe aufweist und daß die Membran (30) strahlungsdurchlässig ist.

8. Polymerisationsgerät nach einem der vorhergehenden Ansprüche, **dadurch gekennzeichnet**, daß zwischen dem Strahler (18) und dem ersten Raum (24) ein Infrarotfilter (27) angeordnet ist.

9. Polymerisationsgerät nach einem der vorhergehenden Ansprüche, **dadurch gekennzeichnet**, daß der zweite Raum (36) eine Schließvorrichtung (16) aufweist, mit welcher er druckfest verschließbar ist.

10. Polymerisationsgerät nach einem der vorhergehenden Ansprüche, **dadurch gekennzeichnet**, daß das Polymerisationsgerät (10) teilbar ausgebildet ist, wobei der erste Raum (24) zusammen mit der Membran (30) von dem zweiten Raum (36) entfernbar ist, und wobei eine Schließvorrichtung (16), die insbesondere einen Bajonettverschluß aufweist, einen den ersten Raum (24) und den Strahler (18) aufweisenden Oberteil (14) des Polymerisationsgeräts (10) auf einem den zweiten Raum (36) und das Modell (42) aufweisenden Unterteil (12) festhält.

11. Polymerisationsgerät nach einem der vorhergehenden Ansprüche, **dadurch gekennzeichnet**, daß die Stützvorrichtung (40) einen Sockel (52) aufweist, der sich in den zweiten Raum (36) erstreckt und auf welchem mindestens ein Modell (42) etwa zentral in dem zweiten Raum (36) aufnehmbar ist.

12. Polymerisationsgerät nach einem der vorhergehenden Ansprüche, **dadurch gekennzeichnet**, daß der Strahler (18) eine Mehrzahl von Einzelstrahlern (20,22) aufweist, die nebeneinander angeordnet sind, und insbesondere auf den Bereich des Modells (42) fokussiert sind.

13. Polymerisationsgerät nach Anspruch 11, **dadurch gekennzeichnet**, daß die Einzelstrahler (20,22) im stumpfen Winkel zueinander angeordnet sind und daß sich ihre optischen Achsen etwa im Bereich des Modelles (42) schneiden.

## Claims

1. A polymerisation apparatus having a radiation source for the emission of polymerising radiation, in particular light, in a first chamber, with a flexible radiation-permeable membrane (30) which separates a second chamber (36) from the first chamber (24), wherein in the second chamber (36) it is possible to mount a pattern (42), in particular of a tooth stump, on which the radiation can act and between which and the membrane (30) a sheet (48,50) extends, and wherein the membrane (30) can be deflected by way of a differential pressure between the first chamber (24) and the second chamber (36) towards the pattern (42) thereby deforming the sheet (48,50), **characterised in that** an adjusting device (58) is provided for determining the distance between the pattern (42) and the membrane (30), and the second chamber (36) has substantially pressure-resistant packing (56) which extends outside the region of the pattern (42) and the sheet (48,50).

2. A polymerisation apparatus according to Claim 1, **characterised in that** the second chamber (36) has a support device (40) for the pattern (42), the height and distance of which from the membrane (30) can be adjusted.

3. A polymerisation apparatus according to any one of the preceding Claims, **characterised in that** a support device (40) for supporting the pattern (42) has a mounting plate (54) which is supported on an interchangeable support insert (60;68), in particular a spacer ring (60).

4. A polymerisation apparatus according to any one of the preceding Claims, **characterised in that** the packing (56) is wholly situated between the sheet (48,50) and the membrane (30).

5. A polymerisation apparatus according to any one of the preceding claims, **characterised in that** the first chamber (24) has an air connection (64) through which the differential pressure can be admitted into the first chamber (24) as an overpressure relative to the pressure of the second chamber (36).

6. A polymerisation apparatus according to any one of the preceding claims, **characterised in that** the first and second chambers (24,36) have a respective underpressure connection (64,78) for creating an underpressure relative to the atmosphere.

7. A polymerisation apparatus according to any one of the preceding Claims, **characterised in that** the radiation source (18) is disposed above the first chamber (24) and a cover wall (26) of the first chamber (24) adjacent the radiation source (18) has a disc which permeable to the radiation, and in that the membrane is radiation-permeable.

8. A polymerisation apparatus according to any one of the preceding claims, **characterised in that** an infrared filter (27) is provided between the radiation source (18) and the first chamber (24).

9. A polymerisation apparatus according to any one of the preceding claims, **characterised in that** the second chamber (36) has a closing device (16) with which it can be closed in a pressure-tight manner.

10. A polymerisation apparatus according to any one of the preceding claims, **characterised in that** the polymerisation apparatus (10) is designed to be separable, wherein the first chamber (24) can be removed from the second chamber (36) together with the membrane (30), and wherein a closing device (16), which in particular has a bayonet lock, retains an upper part (14) of the polymerisation apparatus (10) having the first chamber (24) and the radiation source (18) on a lower part (12) having the second chamber (36) and the pattern (42).

11. A polymerisation apparatus according to any one of the preceding claims, **characterised in that** the support device (40) has a pedestal (52) which extends into the second chamber (36) and on which at least one pattern (42) can be accommodated approximately centrally in the second chamber (36).

12. A polymerisation apparatus according to any one of the preceding claims, **characterised in that** the radiation source (18) has a plurality of individual radiation sources (20,22) which are disposed side by side and, in particular, are focussed on the region of the pattern (42).

13. A polymerisation apparatus according to Claim 11, **characterised in that** the individual radiation sources (20,22) are disposed at an obtuse angle to one another, and in that their optical axes intersect approximately in the vicinity of the pattern (42).

## Revendications

1. Appareil de polymérisation, avec un émetteur rayonnant pour fournir un rayonnement de polymérisation, en particulier de la lumière, dans une première enceinte, avec une membrane (30) flexible, perméable au rayonnement, assurant la séparation entre une deuxième enceinte (36) et la première enceinte (24), dans la deuxième enceinte (36) étant -susceptible d'être stocké un modèle (42) susceptible d'être sollicité par le rayonnement, en particulier un chicot de dent, entre lequel et la membrane (30) s'étend une feuille (48, 50) et la membrane (30) étant susceptible d'être déplacée, par l'effet d'une différence de pression agissant entre la première enceinte (24) et la deuxième enceinte (36) jusqu'au modèle (42), en déformant la feuille (48, 50), **caractérisé en ce qu**'est prévu un dispositif de réglage (58), pour assurer la fixation de l'espacement entre le modèle (42) et la membrane (30), et la deuxième enceinte (36) présentant des corps de remplissage (56) pratiquement résistants à la pression, qui s'étendent à l'extérieur de la zone du modèle (42) et de la feuille (48, 50).

2. Appareil de polymérisation selon la revendication 1, **caractérisé en ce que** la deuxième enceinte (36) présente un dispositif de soutien (40) pour le modèle (42), dont la hauteur et l'espacement par rapport à la membrane (30) sont réglables.

3. Appareil de polymérisation selon l'une des revendications précédentes, **caractérisé en ce qu**'un dispositif de soutien (40) pour soutenir le modèle (42) présente une plaque de pose (54), soutenue sur un insert de soutien (60; 68) remplaçable, en particulier une bague d'espacement (60).

4. Appareil de polymérisation selon l'une des revendications précédentes, **caractérisé en ce que** les corps de remplissage (56) s'étendent complètement entre la feuille (48, 50) et la membrane (30).

5. Appareil de polymérisation selon l'une des revendications précédentes, **caractérisé en ce que** la première enceinte (24) présente un raccordement d'air (64), par lequel la pression différentielle est susceptible d'être introduite dans la première enceinte (24), en tant que surpression par rapport à la pression de la deuxième enceinte (36).

6. Appareil de polymérisation selon l'une des revendications précédentes, **caractérisé en ce que** la première et la deuxième enceinte (24, 36) présentent chacune un raccordement à dépression (64, 78) pour générer une dépression par rapport à l'environnement.

7. Appareil de polymérisation selon l'une des revendications précédentes, **caractérisé en ce que** l'émetteur rayonnant (18) est disposé au dessus de la première enceinte (24) et une paroi de couverture (26), voisine de l'émetteur rayonnant (18), de la première enceinte (24) présente un disque perméable au rayonnement et en ce que la membrane (30) est perméable au rayonnement.

8. Appareil de polymérisation selon l'une des revendications précédentes, **caractérisé en ce qu**'un filtre à infrarouge (27) est disposé entre l'émetteur rayonnant (18) et la première enceinte (24).

9. Appareil de polymérisation selon l'une des revendications précédentes, **caractérisé en ce que** la deuxième enceinte (36) présente un dispositif de fermeture (16), à l'aide duquel elle est obturable de façon résistante à la pression.

10. Appareil de polymérisation selon l'une des revendications précédentes, **caractérisé en ce que** l'appareil de polymérisation (10) est réalisé de façon à pouvoir être subdivisé, la première enceinte (24), conjointement avec la membrane (30), étant susceptible d'être enlevée de la deuxième enceinte (36), et un dispositif de fermeture (16), qui en particulier présente une fermeture à baïonnette, fixe sur une partie inférieure (12), présentant la deuxième enceinte (36) et le modèle (42), une partie supérieure (14), présentant la première enceinte (24) et l'émetteur rayonnant (18), de l'appareil de polymérisation (10).

11. Appareil de polymérisation selon l'une des revendications précédentes, **caractérisé en ce que** le dispositif de soutien (40) présente un socle (52), qui s'étend dans la deuxième enceinte (36) et sur lequel un modèle (42) est susceptible d'être supporté, à peu près centralement dans la deuxième enceinte (36).

12. Appareil de polymérisation selon l'une des revendications précédentes, **caractérisé en ce que** l'émetteur rayonnant (18) présente une pluralité d'émetteurs rayonnants élémentaires (20, 22), disposés les uns à côté des autres et en, particulier, focalisés sur la zone du modèle (42).

13. Appareil de polymérisation selon l'une des revendications précédentes, **caractérisé en ce que** les émetteurs rayonnants élémentaires (20, 22) sont disposés les uns par rapport aux autres en formant un angle obtus et en ce que leurs axes optiques se coupent à peu près dans la zone du modèle (42).
